## Europäisches Patentamt

## European Patent Office

## Office européen des brevets

(19)

(11) Veröffentlichungsnummer: **0 071 806**
**B1**

(12) **EUROPÄISCHE PATENTSCHRIFT**

(45) Veröffentlichungstag der Patentschrift:
**03.06.87**

(21) Anmeldenummer: **82106457.3**

(22) Anmeldetag: **17.07.82**

(51) Int. Cl.⁴: **H 01 G 1/02**

(54) **In einem Gehäuse vergossener Kondensatorwickel.**

(30) Priorität: **05.08.81  DE 3131020**

(43) Veröffentlichungstag der Anmeldung:
**16.02.83 Patentblatt 83/7**

(45) Bekanntmachung des Hinweises auf die Patenterteilung:
**03.06.87 Patentblatt 87/23**

(84) Benannte Vertragsstaaten:
**BE DE GB IT SE**

(56) Entgegenhaltungen:
**DE - A - 2 928 965**
**FR - A - 1 348 737**

(73) Patentinhaber: **ITT INDUSTRIES INC., 320 Park Avenue, New York, NY 10022 (US)**

(84) Benannte Vertragsstaaten: **BE GB IT SE**

(73) Patentinhaber: **Deutsche ITT Industries GmbH, Hans-Bunte-Strasse 19 Postfach 840, D-7800 Freiburg (DE)**

(84) Benannte Vertragsstaaten: **DE**

(72) Erfinder: **Knoll, Peter, Luebecker Strasse 1, D-8510 Fuerth (DE)**

(74) Vertreter: **Hösch, Günther, Dipl.-Ing. et al, c/o Standard Elektrik Lorenz AG Patent- und Lizenzwesen Kurze Strasse 8 Postfach 300 929, D-7000 Stuttgart 30 (DE)**

**Beschreibung**

Die Erfindung bezieht sich auf einen in einem einseitig offenen Gehäuse in Vergussmasse eingebetteten Kondensatorwickel aus metallisierten Kunststoffolien mit stirnseitigen metallischen Kontaktschichten.

Solche Kondensatoren werden vielfach als Motoranlass-Kondensatoren verwendet.

Wie auch bei vielen anderen im Gehäuse eingebauten Kondensatoren wird auch hierbei gefordert, dass sich der Kondensatorwickel bei Überlastung von selbst abschaltet, ohne dass dabei die Gefahr besteht, dass das Gehäuse durch den auftretenden Druck zersprengt wird.

Es ist bekannt, dass Kondensatorwickel aus metallisierten Kunststoffolien bei Überlastung einerseits dazu neigen, Gase abzugeben, andererseits sich der Wickel selbst verformt.

Diese Veränderungen wurden bereits dazu verwendet, den Kondensatorwickel innerhalb des Gehäuses von seinen Zuleitungen zu trennen oder auch die Zuleitungen selbst zu unterbrechen.

Diese Abtrennung des Kondensatorwickels von den äusseren Gehäuseanschlüssen geschieht z.B. in der Weise, dass sich die stirnseitig aufgespritzte Metallkontaktschicht vom Wickel selbst abhebt, so dass sie den Kontakt mit den Metallisierungen auf den Kunststoffolien verliert. Es kann aber auch durch die bei übermässiger Erwärmung auftretende Verformung des Wickels oder seiner Umgebung der Kondensatorwickel in der Weise von den äusseren Gehäuseanschlüssen getrennt werden, dass die Anschlussdrähte zwischen Wickelstirnseite und Gehäuseanschluss an irgendeiner Stelle unterbrochen, z.B. zerrissen werden.

Besondere Schwierigkeiten treten jedoch auf, wenn die Forderung, dass sich der Kondensator bei Überlastung selbst abschalten soll, an Kondensatoren gestellt wird, die vollständig in einer Vergussmasse eingebettet sind.

Das Eingiessen eines Kondensatorwickels in einem einseitig offenen Gehäuse hat den Vorteil einer sehr einfachen Herstellung und eines zuverlässigen Schutzes des Kondensatorwickels gegen die umgebende Atmosphäre. Beim Vergiessen des Kondensatorwickels im Gehäuse wird nicht nur der Wickel mit den daran befestigten Anschlussdrähten in die Vergussmasse eingebettet, sondern es ist auch ein zusätzlicher Verschluss des Kondensatorgehäuses überflüssig. Die äusseren Anschlüsse des Kondensators sind hierbei meist auf einer einfachen Isolierstoffplatte befestigt, die mit in die Vergussmasse eingegossen wird. Es entfällt auf die Weise die Verwendung von mehr oder weniger komplizierten Gehäusedeckeln und deren Befestigung auf dem Gehäuse sowie deren Abdichtung gegenüber dem Gehäuse. Andererseits hat sich gezeigt, dass bei derart vergossenen Kondensatorwickeln die Abschaltsicherheit bei Überlastung sehr zu wünschen übrig lässt. Dies beruht wohl nicht zuletzt darauf, dass der ganze Kondensatorwickel und die Zuleitungsdrähte fest von der Vergussmasse umschlossen sind, so dass Bewegungen des Wickels bzw. der Anschlussdrähte gegenüber der Vergussmasse nur sehr beschränkt möglich sind.

Aus der DE-OS 2 336 727 ist ein solcher Kondensator bekannt, bei dem man versucht hat, durch Anordnung von Hohlräumen innerhalb der Vergussmasse die Abaschaltsicherheit des Kondensators zu verbessern. Die Hohlräume werden nach der Vorveröffentlichung beispielsweise in der Weise erhalten, dass der Kondensatorwickel mit einer manschettenartig überstehenden Folie umwickelt wird, so dass beim Vergiessen des Wickels im Gehäuse ein Luftraum an einer oder beiden Wickelstirnseiten bestehen bleibt. Dies macht nicht nur die Verwendung eines zusätzlichen Verfahrensschritts bei Herstellung des Wickels erforderlich, sondern es wird dadurch die Bauhöhe des Kondensatorwickels nicht unwesentlich vergrössert.

Nach einem anderen Verfahren gemäss der genannten Vorveröffentlichung werden zur Bildung der Hohlräume Schaumstoffeinlagen in das Kondensatorgehäuse eingebracht, in die das Vergussmittel nicht eindringen kann, so dass ein nachgiebiger Raum innerhalb der Vergussmasse bestehen bleibt.

Die beiden oben genannten Verfahren zur Herstellung von Hohlräumen innerhalb der Vergussmasse haben den zusätzlichen Nachteil, dass die so gebildeten Hohlräume Luft mit geringem Feuchtigkeitsgehalt enthalten können, die während des Betriebes des Kondensators in den Wikkel hineinwandert und zur Verminderung der elektrischen Isolation und zur Verschlechterung der dielektrischen Eigenschaften beitragen kann. Ausserdem müssen die verwendeten Folien und Schaumstoffe vollkommen beständig gegenüber der verwendeten Vergussmasse sein, denn es dürfen sich während des Betriebes keine Bestandteile der Hohlraumwandung abscheiden, die dann sehr leicht in die vollkommen ungeschützte Wickelstirnseite angrenzend an den Hohlraum einwandern können und zur Verschlechterung der elektrischen Eigenschaften des Kondensators beitragen können. Es wird daher in der genannten Veröffentlichung zusätzlich vorgeschlagen, die Stirnseiten des Wickels mit einer dünnen Vergussmasseschicht zu überziehen. Hierdurch wird die angestrebte Vereinfachung bei der Herstellung solcher Kondensatoren aber wieder zunichte gemacht.

Weiterhin ist aus der FR-A-1 348 737 ein vollständig in Vergussmasse eingebetteter, ansonsten gehäuseloser Kondensatorwickel bekannt. Dort sind beide mit einer Kontaktschicht versehenen Stirnseiten des Kondensatorwickels zunächst mit je einer Scheibe abgedeckt, durch die der mit der Kontaktschicht verbundene Anschlussdraht geführt ist. Die Scheiben bilden eine innerhalb der Vergussmasse befindliche Trennfuge zwischen den Stirnseiten und der Scheibe einerseits und zwischen der Scheibe und der Vergussmasse andererseits, die die Vergussmasse jedoch nicht bis zur Aussenwandung des Kondensatorkörpers durchtrennen.

Schliesslich ist aus der DE-A-2 928 965 ein Kondensatorwickel bekannt, bei dem die Trennfuge ebenfalls unmittelbar zwischen der Stirnseite des Kondensatorwickels und der Vergussmasse vorgesehen ist. Die Vergussmasse befindet sich dabei im Wickelkern und auf den Stirnseiten des Kondensatorwickels und aussen um die Mantelfläche desselben ist ein für Gase und/oder Schmelzmasse durchlässiges Ausgleichsvolumen zwischen dem Kondensatorwickel und dem einseitig offenen Gehäuse vorgesehen, das z.B. mit Schaumstoff gefüllt sein kann.

Aufgabe der vorliegenden Erfindung ist es, die Abschaltsicherheit von Kondensatoren der eingangs genannten Art mit einfachen Mitteln wesentlich zu verbessern.

Diese Aufgabe wird durch die im Kennzeichen des Anspruchs 1 angegebene Massnahme gelöst.

Eine vorteilhafte Weiterbildung der Erfindung kann dem Unteranspruch entnommen werden.

Die Erfindung geht von der Überlegung aus, dass die Abaschaltsicherheit der in Frage stehenden Kondensatoren dadurch wesentlich verbessert werden kann, dass die Vergussmasse in zwei voneinander getrennte Teile unterteilt wird. Dadurch entsteht eine gewisse Beweglichkeit der einzelnen Vergussmasseteile gegeneinander und damit auch eine Beweglichkeit der in die jeweiligen Vergussmasseteile eingebetteten Teile des Kondensatorwickels bzw. der Anschlussdrähte.

Gemäss der Erfindung wird die Vergussmasse durch eine senkrecht zur Wickelachse verlaufende Trennschicht vollkommen durchtrennt, wobei die Trennschicht mit Abastand von einer Stirnseite des Kondensatorwickels angeordnet ist.

Dies kann in sehr einfacher Weise beim Vergiessen dadurch geschehen, dass zunächst nur ein Teil der Vergussmasse zwischen Gehäuse und Wickel eingebracht wird, dass dann das Material der Trennschicht aufgebracht wird und dass schliesslich der Rest der Vergussmasse eingegossen wird. Es ergibt sich also nur eine unwesentliche Unterbrechung des Vergiessvorganges. Wenn als Vergussmasse in bekannter Weise härtbare Kunstharze verwendet werden, so besteht die Trennschicht vorzugsweise aus einer Wachsschicht.

Der Materialaufwand für die Trennschicht ist äusserst gering, da schon hauchdünne Schichten eine vollkommene Trennung der Vergussmasse bewirken.

Eine wesentliche Beeinträchtigung der Dichtigkeit der Vergussmasse wird dadurch nicht hervorgerufen. Die Trennschicht ist oberhalb des Kondensatorwickels angeordnet. Dadurch ist die besonders gegen Eindiffusion von Fremdstoffen empfindliche Stirnseitenschicht vollkommen in Vergussmasse eingebettet.

Bei übermässiger Erwärmung des Kondensatorwickels durch Überlastung werden durch den sich ausdehnenden Wickelkörper bzw. die dabei entstehenden Gase die so voneinander getrennten Teile der Vergussmasse etwas voneinander entfernt, so dass entweder die stirnseitige Kontaktschicht vom Wickel abgehoben wird oder mindestens einer der Anschlussdrähte zwischen Wickelstirnseite und den äusseren Anschlüssen des Kondensators zertrennt wird.

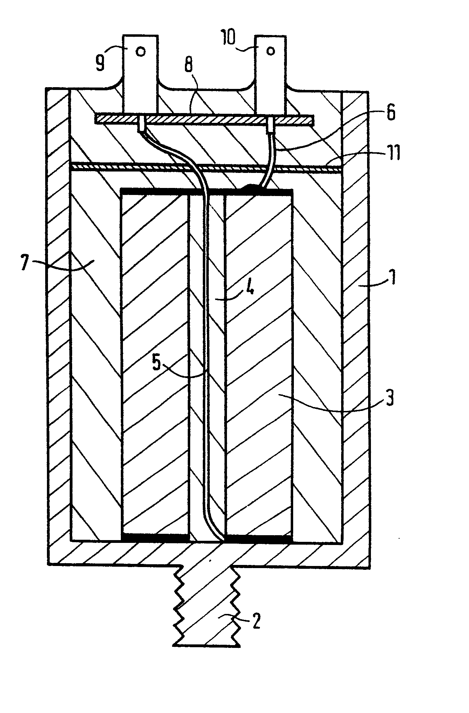

In der Figur ist im Schnitt ein Kondensator gemäss der Erfindung dargestellt.

In das einseitig offene Kondensatorgehäuse 1, das beispielsweise einen angeformten Befestigungsbolzen 2 hat, ist der Kondensatorwickel 3 mittels der Vergussmasse 7 dicht eingebettet. Von den stirnseitigen Kontaktschichten des Wickels 3 führen die Anschlussdrähte 5 und 6 zu entsprechenden Anschlüssen 9 und 10, die aus der Vergussmasse 7 an der Stirnseite herausragen und auf einer Isolierstoffplatte 8 befestigt sind. Diese Isolierstoffplatte ist in die Vergussmasse 7 eingebettet.

Beim Einbringen der Vergussmasse wird nun nicht die ganze Vergussmasse auf einmal in das Kondensatorgehäuse 1 eingegossen, sondern nur ein bestimmter Teil, worauf in ganz dünner Schicht das Material der Trennschicht 11 auf die Oberfläche der Vergussmasse aufgebracht wird. Dies kann beispielsweise so geschehen, dass eine hauchdünne Wachsschicht aufgesprüht wird. Dann wird der Rest der Vergussmasse eingegossen, so dass auch die Trägerplatte in die Vergussmasse eingebettet wird.

Im Gegensatz zu den Hohlräumen gemäss DE-OS 2 336 727, die einerseits anschliessend an eine Stirnfläche des Kondensatorwickels angeordnet sind und sich andererseits nur auf einen Teil des Querschnitts des Kondensatorgehäuses erstrekken, ist die Trennschicht 11 gemäss der vorliegenden Erfindung entfernt von der Kondensatorstirnseite angeordnet und erstreckt sich andererseits über den ganzen Querschnitt der Vergussmasse 7, so dass nach dem Erstarren der Vergussmasse zwei voneinander durch die hauchdünne Schicht 11 getrennte Vergussmasseblöcke entstehen. Es hat sich gezeigt, dass auf diese sehr einfache Weise die Abschaltsicherheit von Kondensatoren der genannten Art erheblich verbessert wird.

**Patentansprüche**

1. In einem einseitig offenen Gehäuse (1) in Vergussmasse (7) eingebetteter Kondensatorwickel (3) aus metallisierten Kunststofffolien mit stirnseitigen metallischen Kontaktschichten, dadurch gekennzeichnet, dass die Vergussmasse (7) senkrecht zur Achse des Kondensatorwickels (3) vollständig durch eine Trennschicht (11) unterbrochen ist und die Trennschicht (11) im Abstand von einer Stirnseite des Kondensatorwickels (3) angeordnet ist.

2. Kondensatorwickel nach Anspruch, dadurch gekennzeichnet, dass bei härtbarem Kunstharz als Vergussmasse (7) die Trennschicht (11) aus einer Wachsschicht besteht.

**Claims**

1. Capacitor winding (3) of metallized plastic foils with metallic contact layers on its face sides, embedded in a potting compound (7) inside a housing (1) open at one end, characterized in that, perpendicularly in relation to the axis of the capacitor winding (3), the potting compound (7) is completely interrupted by a separating layer (11) and said separating layer (11) is arranged at a distance from a face side of the capacitor winding (3).

2. A capacitor winding as claimed in Claim 1, characterized in that said separating layer (11) consists of a layer of wax in cases where a hardening synthetic resin is used as said potting compound (7).

**Revendications**

1. Rouleau de condensateur (3) noyé dans une résine de scellement (7) et encapsulé dans un boîtier (1) ouvert d'un seul côté, en feuilles de matière plastique métallisées, avec des couches de contact métalliques sur les faces extrêmes, caractérisé en ce que la résine de scellement (7) est totalement interrompue perpendiculairement à l'axe du rouleau de condensateur (3) par une couche de séparation (11) et en ce que la couche de séparation (11) est disposée à distance d'une face du rouleau de condensateur (3).

2. Rouleau de condensateur selon la revendication 1, caractérisé en ce que, la résine de scellement (7) étant une résine synthétique durcissable, la couche de séparation (11) est une couche de cire.